Europäisches Patentamt

European Patent Office

Office européen des brevets

(19)

(11) Publication number: **0 240 217 B1**

# EUROPEAN PATENT SPECIFICATION

(12)

(45) Date of publication of patent specification: **02.09.92**  (51) Int. Cl.⁵: **G11B 27/024**

(21) Application number: **87302448.3**

(22) Date of filing: **20.03.87**

(54) **Editing apparatus for recording information signals.**

(30) Priority: **20.03.86 JP 64563/86**

(43) Date of publication of application:
**07.10.87 Bulletin 87/41**

(45) Publication of the grant of the patent:
**02.09.92 Bulletin 92/36**

(84) Designated Contracting States:
**DE FR GB NL**

(56) References cited:
**EP-A- 0 103 463**
**EP-A- 0 114 508**
**EP-A- 0 205 153**

(73) Proprietor: **SONY CORPORATION**
**7-35 Kitashinagawa 6-chome Shinagawa-ku**
**Tokyo 141(JP)**

(72) Inventor: **Kojima, Toshiaki Patents Department Sony Corp.**
**7-35 Kitashinagawa Shinagawa-ku**
**Tokyo 141(JP)**

(74) Representative: **Thomas, Christopher Hugo et al**
**D Young & Co 10 Staple Inn**
**London WC1V 7RD(GB)**

Rank Xerox (UK) Business Services

## Description

This invention relates to video tape recorders (VTRs) including editing apparatus, and to methods of using such VTRs.

Editing recorded information signals typically involves the arrangement of one or more portions that have been previously recorded onto a single composite record medium, which is the so-called master tape. A master tape can be produced using a single source tape or a plurality of source tapes, and such editing operations are referred to as assemble editing. The signal element that is to be reproduced from one tape and subsequently recorded on the master tape is typically referred to as a cut. Thus, using assemble editing techniques, a number of cuts can be recorded sequentially on the so-called master tape. Therefore, assuming video information is involved, at least one video tape playback apparatus and at least one video tape recording apparatus are required to perform the assemble editing technique described above and, typically, these units are well-known video tape recorders.

Although VTRs are produced to high manufacturing standards, there are some measurable differences, which fall within the manufacturing tolerances, between all VTRs. For example, the phase of a video signal recorded by the rotary recording head will almost always be found to be slightly different from the phase of a control signal (CTL) that is recorded by a fixed control head. This phase difference is referred to hereinafter as CTL phase information. Another example of manufacturing discrepancies that may occur is that the location of the head on the head mounting element, typically a dynamic tracking (DT) device, can vary by a measurable amount even although the head locations are within manufacturing tolerances. Hereinafter, such differences in head mounting location that occur during manufacturing are referred to as head position information. Therefore, if assemble editing is achieved by moving the master tape from one VTR to another, the differences of the CTL phase information or the head position information will cause an abrupt change in pitch between the last track of a cut and the first track of the next cut on the master tape, which will then adversely affect the tracking servo of a VTR in the playback mode. The tracks in each individual cut will, of course, all have the same pitch and the tracking servo of the VTR can provide correct tracking for each such cut.

In order to resolve the above problem, it has been proposed to control the tracking by changing either the CTL phase or the head position, in accordance with tracking information obtained by reproducing a cut located prior to the desired editing point. This operation is apply termed tracking adjustment, and it is generally possible to provide a smooth editing-in of the cut at the desired position. Nevertheless, disadvantages still remain in this proposed approach. More particularly, although an abrupt change of the head tracking can be prevented between the end of one cut and the beginning of the next cut at the editing point using the above-described tracking adjustment, there nevertheless is detected a small tracking discrepancy at the editing point between the last track and the first track of successive cuts. This tracking discrepancy has been found to occur whether or not tracking adjustments are made using CTL phase information or dynamic tracking head information, and is thought to be due to inherent errors in the head position detector used in tracking control, and to the fact that there are no control signal pulses on the tape at the location at which the next cut is to be recorded.

Although this tracking discrepancy initially appears to be a minor problem and, by itself, is not a serious problem, in an assembly editing operation a large number of cuts will typically be recorded on the master tape by the same VTR, maybe up to two hundred cuts. Even using the same VTR a tracking adjustment as described above will be necessary and since the same VTR is used, the head position detector error at each editing point, for example, can be considered to be substantially the same. Therefore, the tracking discrepancy that occurs at each editing operation will accumulate, and the accumulated tracking discrepancy will become appreciable so as to be readily noticeable and objectionable. Moreover, in the case of a VTR with a head mounted on a DT element, the result will be that the DT element will be driven to the limit of its deflection, with no travel remaining to accommodate additional tracking discrepancies.

European patent specification EP-A1-0 103 463 discloses an automatic tracking method for the accurate positioning of a magnetic head with information previously recorded on the magnetic tape. Tracking is automatically adjusted based on a repetitive sampling process in which the results are mathematically averaged to determine a precise centre position.

According to the present invention there is provided a video tape recorder for recording a video signal in oblique tracks on a tape or reproducing the signal therefrom, the recorder having an editing apparatus for recording the signal in cuts, a cut being the consecutive tracks between two editing points, the apparatus comprising:

a transducer head;

a head position detector for generating, when in the reproducing mode,

a signal indicative of the head position relative to the track; and

a head position controller for controlling, when in the recording mode, the position of the head relative to the tape;

characterized by:

a control circuit having a first memory section for storing the head position signal of the last cut and a second memory section for storing the head position signal of an earlier cut, the control circuit further having a differential circuit for generating the difference between the signals in the first and second memory sections and a decision circuit for determining whether the difference signal exceeds a predetermined value in such a way that, when the difference signal does not exceed the predetermined value, the signal in the second memory section is applied to the head position controller for the recording of the next cut, and that, when the difference signal exceeds the predetermined value, the signal in the first memory section is applied to the head position controller for the recording of the next cut and thereafter the signal of the first memory section is stored in the second memory section.

Thus with an embodiment of the invention, the above problem can be solved by controlling a VTR using tracking information detected from a cut that was made prior to the desired editing point.

The invention will now be described by way of example with reference to the accompanying drawings, throughout which like parts are referred to by like references, and in which:

Figure 1 is a diagrammatic representation of transverse tracks formed on a magnetic tape using known apparatus;

Figure 2 is a graph showing a tracking discrepancy at an editing point in Figure 1;

Figure 3 is a graph representing an accumulation of tracking discrepancies, such as in Figure 2, that occur in the known apparatus;

Figure 4 is a block diagram of a VTR having an embodiment of editing apparatus comprising a tracking control system and according to the present invention;

Figure 5 is a flow chart of a processing procedure carried out by the system of Figure 4;

Figure 6 is a graph representing a tracking discrepancy at an editing point using the apparatus of Figure 4;

Figure 7 is a graph representing the tracking discrepancies using the apparatus of Figure 4 in which there is no accumulation; and

Figure 8 is a block diagram of another embodiment of editing apparatus.

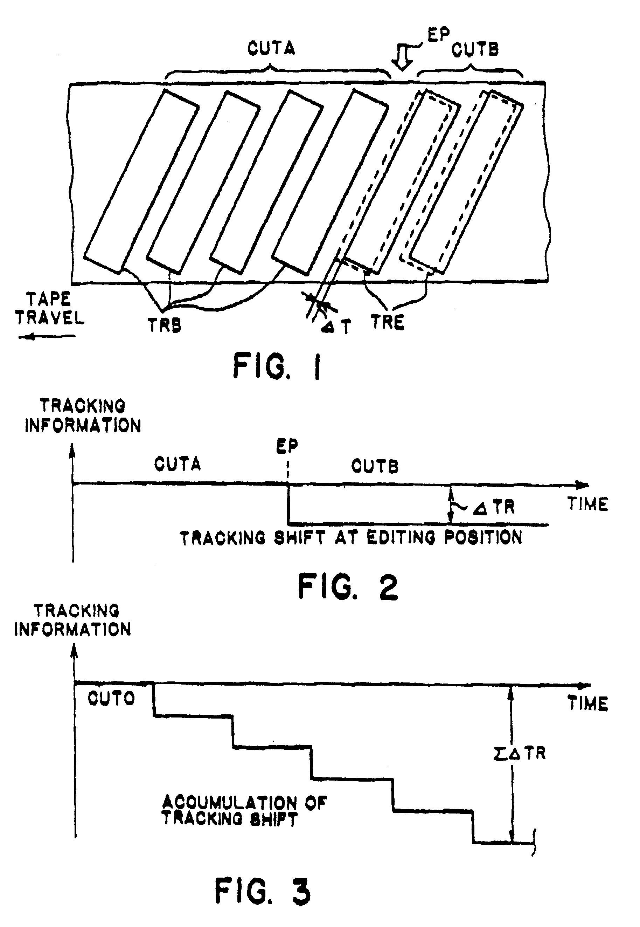

Figure 1 represents a master tape that has been assemble edited using the previously proposed technique of changing the control phase or the head position in accordance with the stored tracking information, which changes have been referred to as the CTL phase information or the head position information, respectively. In Figure 1, the information that has already been edited-in is arranged in tracks TRB and is denoted as CUT A, which is located prior to the editing point EP in relation to the direction of tape travel. The object is then to adjust the location of the first tracks TRE of CUT B relative to the location of the last tracks TRB of CUT A, which have already been recorded, so that there is no discernable change in track pitch between cuts when the master tape is played back. Figure 1 shows this operation having been successfully accomplished to permit acceptable playback. Even so, there is a finite, detectable tracking discrepancy between the end of CUT A and the beginning of CUT B at the editing point EP, which is denoted as $\Delta T$. This tracking discrepancy $\Delta T$ can be due to detector error or the like, as described above.

Figure 2 represents this tracking shift between the end of CUT A and the beginning of CUT B at the editing point EP as a difference $\Delta TR$, which is derived either from the CTL phase information or the DT head position information.

The problem discussed above is seen more clearly in that these tracking discrepancies and the head shifts necessary to correct them will occur at successive edit points EP and will tend to accumulate, so the sum will become very large. A summation of successive differences $\Delta TR$ starting with the tracking information of a first cut, referred to as the base track CUT 0, is shown in Figure 3. Thus, it is seen that with successive editing operations the accumulation of tracking shifts becomes quite large and objectionable.

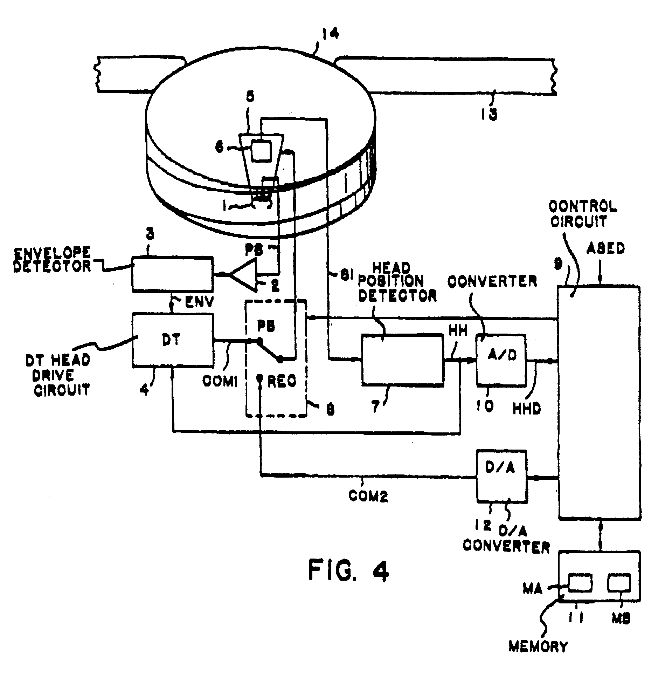

The embodiment of Figure 4 provides tracking control in an assemble editing operation by controlling the dynamic tracking (DT) of the head position, yet avoids inherent detector error by using, if possible, tracking information that was used before instead of deriving new information each time. A system to obtain head position information for use as tracking information by reproducing a cut that is recorded ahead of the editing point will now be described.

A video signal PB is produced by a dynamic tracking head 1 from a magnetic tape 13 that has been wrapped in a helical fashion about a guide drum 14. This reproduced video signal PB is fed through a playback amplifier 2 to an envelope detector 3. Envelope detectors are well-known in this technology, and the envelope signal ENV detected by the envelope detector 3 is then fed to a DT head drive circuit 4. The head 1 is mounted on a deflectable head mounting element, which generally comprises a bimorph leaf 5, and in order to determine the extent of deflection of the bimorph leaf 5, a deflection detecting device 6 is provided. The deflection detecting device 6 typically comprises a strain gauge and provides a detection signal S1 fed to a head position detector 7. The head position detector 7 generates a head position signal HH that indicates a position (head height) of the head 1 and which is fed back to the head drive circuit 4. The head drive circuit 4 generates a head position correction command signal COM 1 that drives the bimorph leaf 5 so that the output ENV of the envelope detector 3 is maximized, as determined by the head drive circuit 4. More specifically, the head position correction command signal COM 1 is fed to a playback contact PB of a switch 8 for connection directly to the bimorph leaf 5. Operation of the switch 8 is under the control of a control circuit 9, such as a microprocessor, and during playback the head position correction command signal COM 1 controls the position of the bimorph leaf 5 and the head 1 to be in the optimum tracking position. These detectors and the drive circuit can all be a source of error contributing to the discrepancy described above.

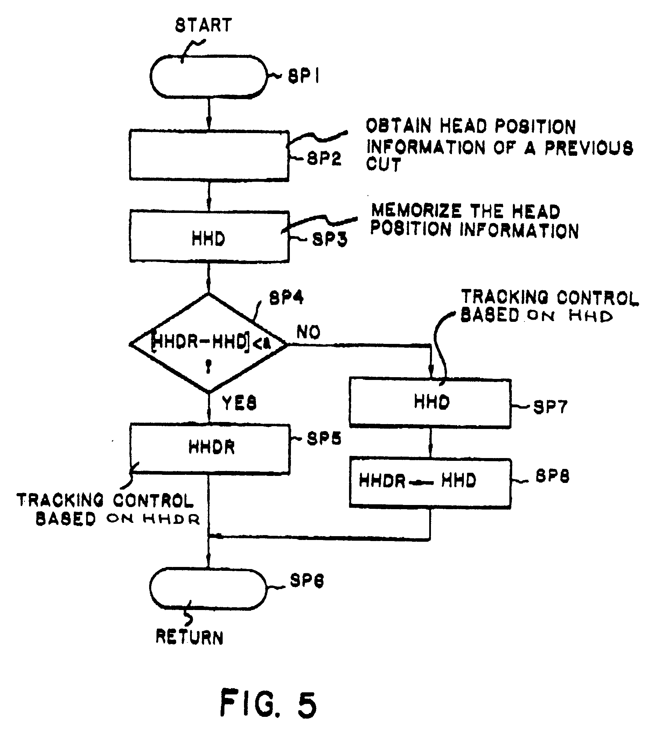

The control circuit 9, such as a microprocessor, receives the head position signal HH from the head position detector 7 after it has been converted to digital form (HHD) by an analogue-to-digital (A/D) converter 10. Then, the digital head position signal HHD is fed to the control circuit 9, the relevant operation of which will be explained in detail hereinbelow. Connected to the control circuit 9 is a memory 11 that aids in generating a tracking information signal used to control the head position in the assemble editing mode. The generated control digital signal is converted to an analogue control signal COM 2 by passing it through a digital-to-analogue converter 12 and then applying it through a record contact REC of the switch 8 to the bimorph leaf 5. The memory 11, which is connected to the control circuit 9, has two separate memory areas, MA and MB. The control circuit 9 operates to control the tracking operation in the assembly edit mode in accordance with the flowchart of Figure 5.

Referring now to Figure 5, a start step SP1 commences after an assemble edit command signal ASED has been supplied to the control circuit 9 from a manual keyboard (not shown) or the like. In the next step SP2, the tape 13 is rewound by a tape drive mechanism (not shown) in order to reproduce the cut (CUT A) that was recorded just prior to the desired editing point EP. To accomplish this, the switch 8 is operated to select the playback contact PB, and the digital data HHD is applied to the control circuit 9. In a step SP3 the digital data corresponding to that head position is stored in the tracking storage area MA of the memory 11. Once such storage has occurred, a decision is made in the control circuit 9 corresponding to the decision at a step SP4 in Figure 5, more particularly, the absolute value of the difference ER between a reference head height digital data HHDR stored in a reference tracking storage area MB of the memory 11, which was used as a reference head position information for tracking control at some previous edit point before the cut next preceding the edit point, and the head height digital data HHD that was just obtained and stored in the storage area MA is determined. The detected difference value ( HHDR - HHD ) is compared with a predetermined value a. The predetermined value a is selected to be a value sufficient to determine whether the difference data ER depends on a detector error of the head position signal HH or on a compatibility problem between VTRs, for example, where the previous cut on the master tape had been recorded by a different VTR. Although the value of a can be selected to be any desired value sufficient to distinguish between these two situations, a value that has been found to be advantageous for use corresponds to 3 to 4% of the track width. If, as a result of the comparison represented in the step SP4, the decision is made that the difference ER is smaller than the predetermined value a, the operation of the control circuit 9 proceeds to a step SP5 and the switch 8 is changed to the recording contact REC after the head 1 comes up to the editing point. There, the head position digital data HHDR from an earlier cut that had been stored in the storage area MB of the memory 11 is applied to the bimorph leaf 5 through the D/A converter 12. Then at a step SP6, the control returns to the main routine, which forms no part of the present invention. As described above, the head 1 performs editing using tracking information (COM 2) that is not based upon the head position information obtained from the cut next preceding the editing point EP but, rather, is based on head position information of a cut that was recorded at least twice removed from the editing point.

On the other hand, if at the step SP4 the result of the comparison is NO, that is, the absolute value of the difference data ER is larger than the reference value a, the control circuit 9 operates to perform an operation shown as a step SP7. At the step SP7, the switch 8 is changed to the recording mode (REC) after the DT head 1 comes up to editing point EP, and then the head position digital data HHD that was stored in the memory storage area MA of the memory 11 is fed to the bimorph leaf 5 through the D/A converter 12 and the switch 8. Thus, the head position of the head 1 used to record CUT B is based solely on the head position information that was obtained from the cut immediately preceding the editing point EP. In other words, no change. After such head shift operation, the control circuit 9 performs a step SP8 at which the head position digital data HHD that had been stored in the storage area MA is transferred to the storage area MB in the memory 11 and now becomes the new reference data (HHDR). After such transfer, the program then returns to the main routine by way of the step SP6.

Accordingly, as described above, the step SP5 is selected when the absolute value of the difference between the so-called reference head height value (HHDR) of a previous cut and the head height value (HHD) of the last cut recorded before the current edit point is smaller than the predetermined value a. This results in the editing in of a new cut at the edit point EP by using the same head position information that had been used to record a previous cut sometime before the cut immediately preceding the edit point. Thus, the head shift value will be zero. In other words, by examining the head shift information of two cuts that both precede the edit point it is possible to determine if the same VTR made those cuts and, if so, then the head 1 need not be shifted to record the current cut at the edit point EP. On the other hand, when the absolute value of the difference ER is larger than the predetermined value a, the procedures of the steps SP7 and SP8 are followed, thereby to edit a new cut at the edit point EP by using the head position information (HHD) that corresponds to the cut immediately preceding the edit point. Then, this preceding cut head position information becomes the reference head height data (HHDR) and is shifted into the storage area MB of the memory 11. An initial value can be set into the storage area MB when the program is first in an initialization mode, not shown in Figure 5.

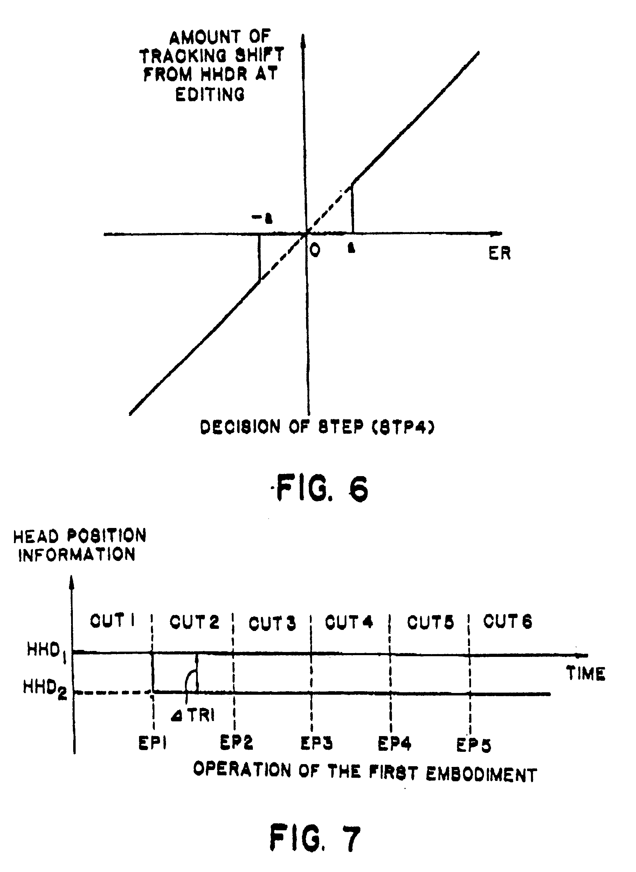

The step SP4 of Figure 5 is represented graphically in Figure 6, in which it is seen that the amount of tracking shift is linearly related to the difference signal ER, provided the absolute value of such difference exceeds the predetermined value a.

The operation of the apparatus of Figure 4 in accordance with the process shown in Figure 5 is further explained using Figure 7, in which it is seen that when the CUT 2 is edited at a first editing position EP1 that occurs at the end of the CUT 1, assuming that the decision results at the step SP4 in the operating procedure of Figure 5 is NO, because an initialize value has been stored in the reference tracking data storage area MB that results in the difference value ER being larger than the predetermined value a, the CUT 2 is edited based on a head position information HHD1 of the CUT 1 located just prior to the editing point EP1, according to the step SP7.

In this assemble editing operation, the head will only be shifted by an amount ΔTR1 relative to the head position before the editing point EP1, however, this tracking shift ΔTR1 is based upon the actual detector error and, thus, the amount of the tracking shift is small. Continuing this example, the initialized value stored in the reference tracking storage area MB of the memory 11 that was assumed to be the head position information HHD1 of the CUT 1 is retained in the storage area MB as the reference head position information (HHDR). Then, in the editing operation of a further CUT 3 at an editing point EP2, the head position information HHD1 of the initial CUT 1 will be compared with the head position information HHD2 of the CUT 2 that is stored in the storage area MA. Thus, the error value ER will be the difference between the detected head position information HHD2 and the head position information HHD1 and will be equal to the detector error ΔTR1. In this situation, because the preselected value a will be larger than the detector error ΔTR1, the decision of the step SP4 will be YES, and the new CUT 3 is edited based on the head position information HHD1 that was used in the earlier CUT 1, which is now the so-called reference head position information (HHDR). Thus, because the CUT 3 is edited using the head shift corresponding to the detector error ΔTR1 derived from the CUT 1, no new detector error is introduced and there should be little or no tracking shift relative to the CUT 2. When this editing of the CUT 3 has been completed, the head position information of the initial CUT 1 will still be stored in the reference tracking data storage area MB of the memory 11. Then, as with the above-described operation, editing of a subsequent CUT 4 at an editing point EP3 will be based again on the head position information HHD1 of the initial CUT 1, because that information HHD1 has been stored in the storage area MB and the decision of the step SP4 will again be YES. Then, when the CUT 4 is edited, it will have the detected error ΔTR1 relative to 2H the CUT 1 already included, and there will be little or no tracking shift relative to the CUT 3.

Therefore, it is seen that the editing of a new cut is accomplished using information based upon the head position information HHD1 of a first CUT 1, when the new cut is to be edited into the same master tape using the same VTR. In this way, it is possible to assemble edit new cuts having relatively little or no tracking shift at the subsequent respective editing points, for example, at the edit points EP2, EP3, EP5, ...

There are, of course, various approaches to performing editing operations and an example of another such editing operation is where the master tape is first produced using a first VTR, and then the editing process onto that master tape is continued utilizing another VTR. In that case, because a VTR cannot distinguish whether a master tape placed therein has been changed to another master tape, the difference value ER compared with the predetermined value a at the step SP4 of Figure 4 is the difference between the head position information HHDR obtained from the first master tape before it was changed, and which was stored in reference tracking storage area MB, and the head position information HHD that is detected from the second master tape after it has been placed in the VTR and played back up to a position just prior to the edit point. In this situation, it has been found that even although the relevant characteristics of each of the two VTRs are within the specified tolerances, in most cases the difference value ER (|HHDR - HHD|) will be larger than the predetermined value a. As a result of this, the decision in the step SP4 will be NO, so that the editing of a new cut is recorded using new head position information based upon head position information obtained from the cut immediately preceding the edit point on the new or second master tape. In this way the tracking is adjusted exactly, although there may exist a small tracking error at the editing position between the two cuts due to VTR tolerances. Nevertheless, this tracking error will be negligible when compared with the tracking error that would be present if the editing used the tracking information from the first master tape.

Therefore, in this embodiment the dynamic head tracking can be adjusted exactly and upon repeated assemble editing operations the detected error will not be accumulated, and it is possible to avoid the situation in which accumulated detected tracking errors will exceed the bending limits of the bimorph leaf upon which the head is mounted.

As described above, the embodiment solves the problem in which a change in pitch between the last track of one cut and the first track of a subsequent cut is corrected with tracking information that includes detector error, such that new tracking information is not derived for each new cut, thereby causing the accumulation of these detector errors. There are, of course, two approaches to controlling track pitch, either shifting the head or altering the relative tapehead speed.

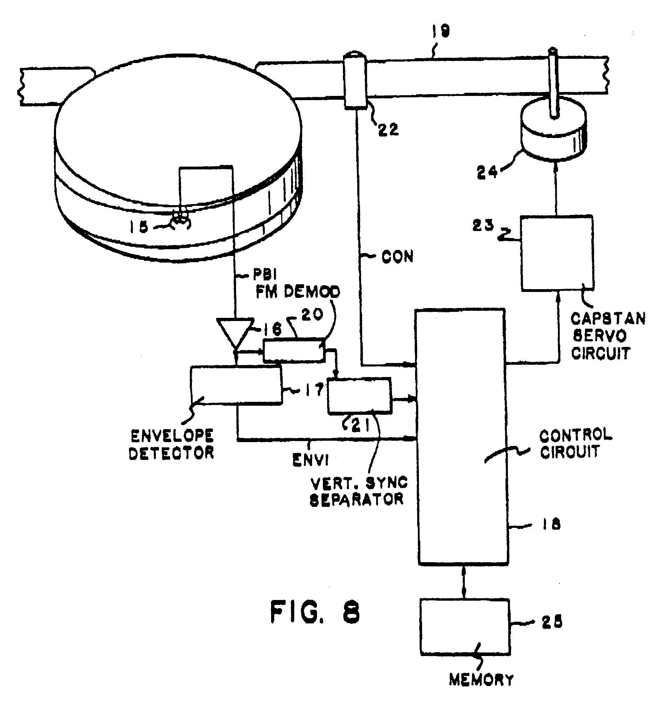

A further embodiment of the present invention is shown in Figure 8, in which the pitch of the tracks in an assemble editing mode is altered by controlling the speed of a magnetic tape 19, for example, by controlling the capstan speed. In the embodiment of Figure 8, the video signal PB1 reproduced from a magnetic tape 19 using a recording and reproducing head 15, which need not be mounted on a bimorph leaf, is applied through a playback amplifier 16 to an envelope detector 17 and the resultant level signal ENV1 is fed to a control circuit 18, which is substantially the same as the control circuit 9 in the embodiment of Figure 4. This amplified video signal from the amplifier 16 is also fed to an FM demodulator 20 and then to a vertical sync separator circuit 21, which separates the vertical sync signal from the demodulated video signal. The separated vertical sync pulses are then fed to a control circuit 18. A control signal CON that was recorded on the tape 19 is picked up by a stationary control head 22 and also fed to the control circuit 18. The control circuit 18 controls driving of the tape 19 by use of a capstan servo circuit 23 that provides the control signal for the capstan motor 24, which cooperates with a pinch roller (not shown) to drive the tape 19. More particularly, the capstan servo circuit 23 drives the tape 19 in order to maximize the level of the detected envelope signal ENV1, as determined by the control circuit 18. In performing the maximizing function, the control circuit 18 detects a phase difference (CTL phase information) between the phase of the control signal CON and the phase of the vertical sync pulses separated from the reproduced video signal PB1. The control circuit 18 then controls the capstan servo circuit 23 in accordance with that phase difference information (CTL phase information).

Therefore, in this embodiment, the tracking information is based on the CTL phase information and the control circuit 18 can control the tracking adjustment at each assembly editing point by utilizing substantially the same procedure as discussed above relative to Figure 5 and utilizing a memory 23, which is connected to the control circuit 18. More particularly, In the operation of this embodiment it is seen that the CTL phase information is detected by reproducing the cut just prior to the editing point, detecting a difference between that detected CTL phase information and another CTL phase information, which was used as a reference at a previous editing point, and then comparing the calculated difference with a predetermined value that is capable of distinguishing whether such difference depends on a detector error ($\Delta$TR) or on a different characteristic between two VTRs. Then, in the situation where the calculated difference is smaller than the predetermined value, the cut is edited using the CTL phase information that was used at the previous editing point so that no new detector error need be accommodated and, where the calculated difference is larger than the predetermined value, tracking control is based on the newly detected CTL phase information.

Therefore, the second embodiment can also avoid accumulation of tracking shifts even if the assembly editing is repeatedly recorded on the same master tape using the same VTR, and it can correct for tracking errors when the master tape is used in a different VTR.

## Claims

1. A video tape recorder for recording a video signal in oblique tracks on a tape (13) or reproducing the signal therefrom, the recorder having an editing apparatus for recording the signal in cuts, a cut being the consecutive tracks between two editing points, the apparatus comprising:

   a transducer head (1);

   a head position detector (7) for generating, when in the reproducing mode, a signal (HHD) indicative of the head position relative to the track; and

   a head position controller (4) for controlling, when in the recording mode, the position of the head (1) relative to the tape (13);

   characterized by:

   a control circuit (9) having a first memory section (MA) for storing the head position signal (HHD) of the last cut and a second memory section (MB) for storing the head position signal (HHDR) of an earlier cut, the control circuit (9) further having a differential circuit for generating the difference (ER) between the signals in the first and second memory sections (MA, MB) and a decision circuit for determining whether the difference signal (ER) exceeds a predetermined value (a) in such a way that, when the difference signal (ER) does not exceed the predetermined value (a), the signal (HHDR) in the second memory section (MB) is applied to the head position controller (4) for the recording of the next cut, and that, when the difference signal (ER) exceeds the predetermined value (a), the signal (HHD) in the first memory section (MA) is applied to the head position controller (4) for the recording of the next cut and thereafter the signal (HHD) of the first memory section (MA) is stored in the second memory section (MB).

2. A video tape recorder according to claim 1 wherein said head position controller (4) includes a capstan servo apparatus (23) so that said tape (11) is driven thereby.

3. A video tape recorder according to claim 2 wherein said head position signals (HHD, HHDR) both represent phase information of CTL pulses recorded at predetermined distances on said tape (11).

4. A method of using a video tape recorder according to claim 1 wherein cuts are recorded using a rotary recording and reproducing transducer head (11), the method comprising the steps of:

   detecting at least one head position signal (HHD) representing a relative position between said head (11) and respective cuts when an envelope level of a reproduced video signal is substantially at a maximum;

   storing the head position signal (HHD) in said first memory (MA);

   comparing the stored head position signal (HHD) with another signal (HHDR) detected from another cut at a previous editing point that is stored in said second memory (MB);

   generating said difference signal (ER) between the two head position signals (HHD, HHDR);

   comparing said difference signal (ER) with a predetermined value;

   controlling the relative position between said head (11) and the successive tracks in response to one of the head position signals (HHD, HHDR) selected as a result of said comparison of the difference signal (ER); and

   then recording a video signal on said tape (13) at an edit point using said head (11).

## Patentansprüche

1. Videorecorder für Videobänder zum Aufzeichnen eines Videosignals in schrägen Spuren auf einem Band (13) oder zur Wiedergabe eines Signals daraus, wobei der Recorder ein Bearbeitungsgerät zum Aufzeichnen des Signals in Abschnitten aufweist und wobei ein Abschnitt aus aufeinanderfolgenden Spuren zwischen zwei Bearbeitungspunkten gebildet wird, wobei das Gerät umfaßt:

   einen Übertragerkopf (1);

   einen Detektor (7) für die Kopfposition zur Erzeugung eines Signals (HHD),wenn der Kopf im Wiedergabebetrieb ist, das die Kopfposition gegenüber der Spur anzeigt; und

   eine Kopfpositionssteuerung (4) zur Steuerung der Position des Kopfes (1) gegenüber dem Band (13), wenn sich dieser im Aufzeichnungsbetrieb befindet;

   gekennzeichnet durch:

   eine Steuerschaltung (9), die einen ersten Speicherbereich (MA) zum Speichern des Kopfpositionssignals (HHD) des letzten Abschnittes aufweist und einen zweiten Speicherbereich (MB) zum Speichern des Kopfpositionssignals (HHDR) eines früheren Abschnittes, weiterhin eine Steuerschaltung (9), die eine Differenzschaltung zur Erzeugung der Differenz (ER) zwischen den Signalen in den ersten und zweiten Speicherbereichen (MA, MB) aufweist und eine Entscheidungsschaltung zur Bestimmung, ob das Differenzsignal (ER) einen vorgegebenen Wert (a) in solch einer Weise übersteigt, daß, wenn das Differenzsignal (ER) einen vorgegebenen Wert (a) nicht übersteigt, das Signal (HHDR) im zweiten Speicherbereich(MB) für die Kopfpositionssteuerung (4) zur Aufzeichnung des nächsten Abschnittes verwendet wird, und daß, wenn das Differenzsignal (ER) einen vorgegebenen Wert (a) übersteigt, das Signal (HHD) im ersten Speicherbereich(MA) für die Kopfpositionssteuerung (4) zur Aufzeichnung des nächsten Abschnittes verwendet wird und danach das Signal (HHD) des ersten Speicherbereichs (MA) in dem zweiten Speicherbereich (MB) gespeichert wird.

2.  Videorecorder für Videobänder nach Anspruch 1, wobei die Kopfpositionssteuerung (4) ein Bandantriebsgerät (23) umfaßt, wodurch das Band (13) angetrieben wird.

3.  Videobandrecorder nach Anspruch 2. wobei beide Kopfpositionssignale (HHD, HHDR) eine Phaseninformation von CTL-Impulsen darstellen, die in vorgegebenen Abständen auf dem Band (13) aufgezeichnet werden.

4.  Verfahren zum Gebrauch eines Videorecorders für Videobänder nach Anspruch 1, wobei Abschnitte aufgezeichnet werden, indem ein drehbarer Aufzeichnungs-und Wiedergabe-Übertragerkopf (1) verwendet wird, wobei das Verfahren die Schritte umfaßt:
Ermittlung wenigstens eines Kopfpositionssignals (HHD), das eine relative Lage zwischen dem Kopf (1) und entsprechenden Abschnitten anzeigt, wenn ein Hüllkurvenpegel eines aufgezeichneten Videosignals weitgehend bei einem Maximum liegt;
speichern des Kopfpositionssignals (HHD) im ersten Speicher (MA);
Vergleich des gespeicherten Kopfpositionssignals (HHD) mit einem anderen Signal (HHDR), das von einem anderen Abschnitt bei einem früheren Bearbeitungspunkt ermittelt wurde, das im zweiten Speicher (MB) gespeichert ist;
Erzeugung des Differenzsignals (ER) zwischen den beiden Kopfpositionssignalen (HHD, HHDR);
Vergleich des Differenzsignals (ER) mit einem vorgegebenen Wert;
Steuerung der relativen Position zwischen dem Kopf (1) und den folgenden Spuren in Antwort auf eines der Kopfpositionssignale (HHD, HHDR), ausgewählt als ein Ergebnis des Vergleichs des Differenzsignals (ER); und
Aufzeichnung eines Videosignals auf dem Band (13) beim Bearbeitungspunkt unter Verwendung des genannten Kopfes (1).

**Revendications**

1.  Enregistreur à bande magnétique (ou magnétoscope) pour enregistrer un signal vidéo sur des pistes obliques sur une bande (13) ou pour reproduire le signal qui en vient, l'enregistreur comportant un appareil d'édition pour enregistrer le signal provenant de coupures, une coupure étant constituée par les pistes consécutives entre deux points d'édition, l'appareil comprenant :
    une tête à transducteurs (1) ;
    un détecteur de position de tête (7) pour engendrer, quand on est dans le mode de reproduction, un signal (HHD) indicatif de la position de la tête par rapport à la piste ; et
    un contrôleur de position de tête (4) pour contrôler quand on est dans le mode d'enregistrement la position de la tête (1) par rapport à la bande (13) ;
    caractérisé par :
    un circuit de commande (9) comportant une première section de mémorisation (MA) pour stocker le signal de position de tête (HHD) à la dernière coupure et une seconde section de mémorisation (MB) pour stocker le signal de position de tête (HHDR) sur une coupure antérieure, le circuit de commande (9) comportant de plus un circuit différentiel pour engendrer la différence (ER) entre les signaux des première et seconde sections de mémorisation (MA, MB) et un circuit de test pour déterminer si le signal de différence (ER) excède une valeur prédéterminée (a) d'une manière telle que, quand le signal de différence (ER) n'excède pas la valeur prédéterminée (a), le signal (HHDR) de la seconde section de mémorisation (MA) soit appliqué au contrôleur de position de tête (4) pour l'enregistrement de la coupure suivante, et en ce que, quand le signal de différence (ER) excède la valeur prédéterminée (a), le signal (HHD) de la première section de mémorisation (MA) soit appliqué au contrôleur de position de tête (4) pour l'enregistrement de la coupure suivante et que par la suite, on stocke le signal (HHD) de la première section de mémorisation (MA) dans la seconde section de mémorisation (MB).

2.  Magnétoscope selon la revendication 1, dans lequel, ledit contrôleur de position de tête (4) comporte un appareil d'asservissement de cabestan (23) de telle sorte que ladite bande (11) est entraînée par celui- ci.

3.  Magnétoscope selon la revendication 2, dans lequel lesdits signaux de position de tête (HHD, HHDR) représentent tous les deux l'information de phase d'impulsions de contrôle (CTL) enregistrée à des distances prédéterminées sur ladite bande (11).

4. Procédé d'utilisation d'un magnétoscope selon la revendication 1, dans lequel on enregistre des coupures utilisant une tête à transducteurs d'enregistrement et de reproduction tournante (11), le procédé comprenant les étapes de :

détection d'au moins un signal de position de tête (HHD) représentant la position relative entre ladite tête (11) et des coupures respectives, quand le niveau d'enveloppe d'un signal vidéo reproduit est pratiquement au maximum ;

stockage du signal de position de tête (HHD) dans ladite première mémoire (MA) ;

comparaison du signal de position de tête stocké (HHD) avec un autre signal (HHDR) détecté d'une autre coupure sur un point de montage précédent qui avait été stocké dans ladite seconde mémoire (MB) ;

production dudit signal de différence (ER) entre les deux signaux de position de tête (HHD, HHDR) ;

comparaison du dit signal de différence (ER) avec une valeur prédéterminée ;

contrôle de la position relative entre ladite tête (11) et les pistes successives en réponse à l'un des signaux de position de tête (HHD, HHDR) sélectionné comme résultat de ladite comparaison du dit signal de différence (ER) ; et

ensuite enregistrement d'un signal vidéo sur ladite bande (13) en un point de montage en utilisant ladite tête (11).

FIG. 1

FIG. 2

FIG. 3

FIG. 4

START

SP1

OBTAIN HEAD POSITION
INFORMATION OF A PREVIOUS
CUT

SP2

MEMORIZE THE HEAD
POSITION INFORMATION

HHD

SP3

SP4

$|HHDR-HHD| < a$ ?

NO

TRACKING CONTROL
BASED ON HHD

HHD

SP7

YES

HHDR

SP5

HHDR ⟵ HHD

SP8

TRACKING CONTROL
BASED ON HHDR

SP6

RETURN

FIG. 5

AMOUNT OF
TRACKING SHIFT
FROM HHDR AT
EDITING

$-a$

O  $a$  ER

DECISION OF STEP (STP4)

## FIG. 6

HEAD POSITION
INFORMATION

| CUT 1 | CUT 2 | CUT 3 | CUT 4 | CUT 5 | CUT 6 |

HHD$_1$

HHD$_2$

TIME

$\Delta$ TRI

EP1    EP2    EP3    EP4    EP5

OPERATION OF THE FIRST EMBODIMENT

## FIG. 7

13

**FIG. 8**

PBI
FM DEMOD

ENVELOPE
DETECTOR

ENVI

VERT. SYNC
SEPARATOR

CON

CAPSTAN
SERVO
CIRCUIT

CONTROL
CIRCUIT

MEMORY